# FASCICULE DE BREVET EUROPEEN

(11) **EP 2 225 933 B1**
(45) Date de publication et mention de la délivrance du brevet: **04.05.2016**
(21) Numéro de dépôt: 10305153.8
(22) Date de dépôt: 16.02.2010
(51) Int. Cl.: A01G 3/04, A01D 34/86, E02F 3/43, B66C 23/00

(54) **Dispositif de taille embarqué**
Bewegliche Schneidevorrichtung
On-board cutting device

(30) Priorité: 18.02.2009 FR 0951050
(43) Date de publication de la demande: 08.09.2010
(73) Titulaire: Coup'Eco, 17800 Pons (FR)
(72) Inventeur: Boulard, Thierry, 17460 Retaud (FR)
(74) Mandataire: Aquinov

(56) Documents cités:
- WO-A-92/11749
- GB-A- 2 115 667
- US-A- 2 832 183
- US-A- 3 462 925
- US-A- 4 956 965

## Description

La présente invention concerne un dispositif embarqué pour l'élagage ou la taille de la végétation.

Du point de vue du fabricant, une offre complète correspond à une gamme de dispositifs de taille adaptable à toutes les applications publiques ou privées, paysagistes, communes, parcs et châteaux, tout en permettant un travail précis et de qualité, qu'il s'agisse d'une taille de haie architecturée ou d'alignement des arbres.

On connaît des dispositifs qui sont utilisés pour la coupe de végétaux, que cela soit pour la taille des haies, pour l'élagage des arbres en bord de route ou bien la taille arboricole.

GB 2 115 667 décrit un dispositif de taille comprenant un bras inférieur et un bras supérieur à l'extrémité duquel est fixé un lamier, ledit lamier étant animé en rotation par l'intermédiaire d'un pignon et d'un crémaillère montée sur un vérin.

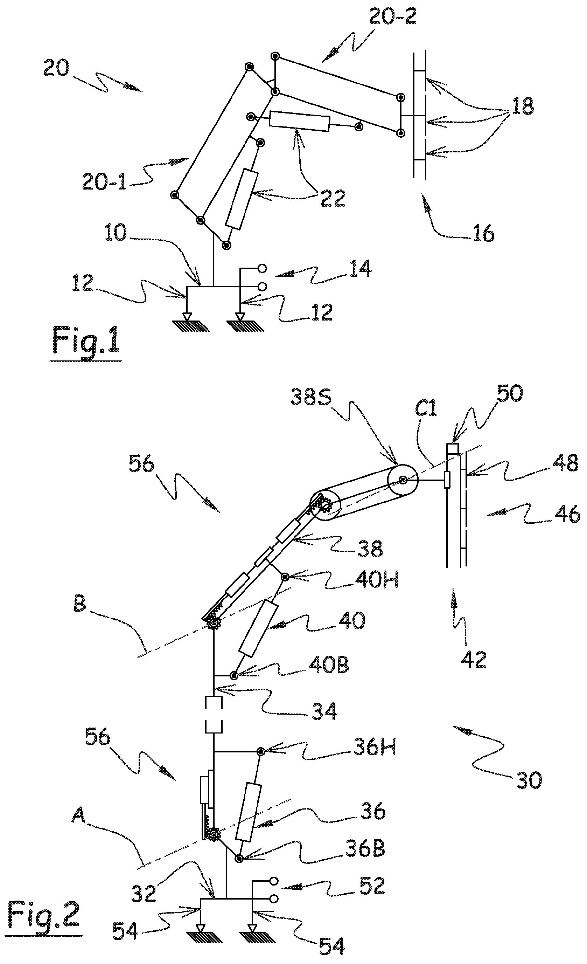

Comme illustré schématiquement en figure 1, ces dispositifs de taille de l'art antérieur comprennent un châssis 10 monté sur des supports 12 et équipé de moyens d'attelage 14 avec un engin, tel un tracteur.

Ensuite, afin de réaliser la taille de la végétation, un lamier 16, pouvant être équipé de différents moyens de coupe 18 tels des lames ou des disques, est relié audit châssis 10 par un bras articulé 20 animé par des actionneurs 22, prenant le plus souvent la forme de vérins.

Ledit bras articulé 20 comprend généralement plusieurs parties mobiles entre elles afin de pouvoir réduire ou étendre la portée et/ou la hauteur de travail du dispositif de taille.

Dans le cas du dispositif de l'art antérieur représenté en figure 1, on trouve une première partie 20-1, mobile par rapport au châssis, et une deuxième partie 20-2 mobile par rapport la première partie 20-1, chaque partie (20-1, 20-2) étant mue par au moins un actionneur 22, le lamier 16 pouvant aussi être relié et animé par rapport à la deuxième partie 20-2 par des moyens appropriés, actionneur 22 ou autre.

Comme représenté sur la figure 1, dans les dispositifs de taille de l'art antérieur, la cinématique du bras articulé 20 comprend au moins un parallélogramme déformable permettant d'asservir mécaniquement le mouvement du lamier au mouvement d'au moins l'une des parties (20-1,20-2).

Un premier inconvénient de ces dispositifs de taille de l'art antérieur à un ou plusieurs parallélogrammes déformables est de limiter les possibilités de fournir une gamme de dispositifs adaptables et standardisés.

En effet, l'augmentation de la portée et/ou de la hauteur de travail nécessite la réalisation d'au moins une des différentes parties (20-1,20-2) dans des dimensions différentes.

Dans le cas d'une partie prenant la forme d'un parallélogramme déformable, ceci engendre la réalisation dans différentes dimensions de tous les composants, et souvent aussi des éléments de liaison, formant ledit parallélogramme.

Dans le but de fabriquer une gamme étendue de dispositifs de taille, c'est à dire comprenant des dispositifs se limitant à la taille de haies de quelques mètres de hauteur jusqu'à des dispositifs devant atteindre le sommet d'arbres de plusieurs mètres, de nombreuses pièces doivent être conçues, fabriquées, et éventuellement stockées pour permettre de remplacer rapidement des pièces endommagées, notamment dans le cadre d'une prestation de service après-vente. Au final, les nombreux composants et liaisons nécessaires à la réalisation d'une partie d'un dispositif de taille prenant la forme d'un parallélogramme déformable limitent l'uniformisation desdits composants, l'adaptabilité de la gamme et multiplient le nombre de pièces de remplacement à prévoir lors de la fabrication.

Aussi, pour fabriquer une gamme étendue de dispositifs de taille et assurer un service après-vente efficace, les coûts de matière et de main d'oeuvre augmentent considérablement.

Un autre inconvénient, relatif aux nombreux composants et liaisons nécessaires à la réalisation d'une partie prenant la forme d'un parallélogramme déformable, concerne le poids et l'encombrement du dispositif de taille selon cet art antérieur.

En effet, la multiplication des pièces conduit à un dispositif de conception lourde nécessitant un porteur, tel un engin ou un tracteur, suffisamment lourd et puissant pour supporter ledit dispositif sans risque de chavirement et pour alimenter en énergie les différents actionneurs mettant en mouvement les différentes parties du dispositif entre elles.

Concernant l'encombrement, la conception en parallélogramme d'au moins une partie (20-1,20-2) peut empêcher de travailler dans des passages étroits dans lesquels l'engin doit se rapprocher de la végétation, et peut parfois nécessiter des manoeuvres de l'engin pour atteindre la végétation avec le lamier 16 à une hauteur désirée et à partir d'une position donnée de l'engin par rapport à ladite végétation.

Aussi, c'est un objectif de la présente invention de pallier les inconvénients des dispositifs de taille de l'art antérieur en proposant un dispositif de taille dont la conception permet de fournir une gamme étendue et standardisée de dispositifs facilement adaptables car comprenant des éléments identiques pour la réalisation de différents dispositifs de ladite gamme, diminuant le nombre de pièces et de liaisons des différentes parties du dispositif ainsi que le poids total du dispositif, et permettant ainsi une utilisation plus aisée du dispositif selon la présente invention avec des porteurs moins lourds et moins puissants avec, de plus, une meilleure agilité et de plus grandes libertés de mouvements entre les différentes parties et le châssis dudit dispositif.

A cet effet, l'invention a pour objet un dispositif de taille pour la végétation comprenant au moins un châssis, au moins un bras inférieur mobile en rotation selon au moins un axe par rapport au châssis et animé par au moins un premier actionneur, au moins un bras supérieur mobile en rotation selon au moins un axe par rapport au bras inférieur et animé par au moins un deuxième actionneur, au moins un lamier relié à l'extrémité supérieure du bras supérieur et monté mobile en rotation selon au moins un premier axe par rapport audit bras supérieur, et des moyens mécaniques d'asservissement des mouvements du lamier aux mouvements desdits bras inférieur et supérieur, lesdits moyens mécaniques d'asservissement comprenant au moins un dispositif principal d'entraînement en rotation du lamier selon ledit premier axe, ledit dispositif de taille étant caractérisé en ce que les moyens mécaniques d'asservissement comprennent un premier dispositif de suivi de la rotation du bras inférieur par rapport au châssis avec un vérin et un deuxième dispositif de suivi de la rotation du bras supérieur par rapport au bras inférieur avec un vérin, et en ce qu'au moins une chambre du vérin du premier dispositif de suivi est reliée à au moins une chambre du vérin du deuxième dispositif de suivi.

D'autres caractéristiques et avantages ressortiront de la description qui va suivre du dispositif de l'invention, description d'un mode de réalisation préférentiel donnée à titre d'exemple uniquement, en regard des dessins annexés sur lesquels :
- la figure 1 est une vue schématique d'un dispositif de taille selon l'art antérieur,
- la figure 2 est une vue schématique d'un dispositif de taille selon l'invention,
- la figure 3 est une vue avant en perspective d'un dispositif de taille selon l'invention,
- la figure 4 est une vue dépouillée avec une coupe partielle d'un dispositif de taille selon l'invention,
- la figure 5 est une vue de détail du dispositif de taille selon l'invention tel que représenté en figure 4,
- la figure 6 est une autre vue de détail du dispositif de taille selon l'invention tel que représenté en figure 4.

La figure 2 illustre schématiquement la conception d'un dispositif 30 de taille pour la végétation selon l'invention.

Par taille de la végétation, l'invention désigne toute opération de coupe d'une végétation, de la taille précise de haie à l'alignement ou même l'élagage des arbres.

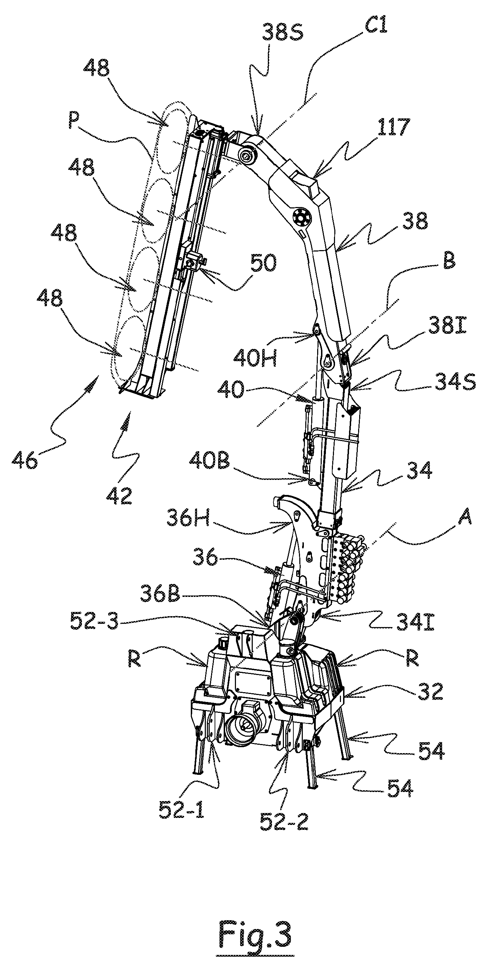

Ainsi, comme représenté sur la figure 3, ledit dispositif 30 de taille pour la végétation comprend au moins un châssis 32, au moins un bras inférieur 34 mobile en rotation selon au moins un axe A par rapport au châssis 32 et animé par au moins un premier actionneur 36, au moins un bras supérieur 38 mobile en rotation selon au moins un axe B par rapport au bras inférieur 34 et animé par au moins un deuxième actionneur 40, au moins un lamier 42 relié à l'extrémité supérieure 385 du bras supérieur 38 et monté mobile en rotation selon au moins un premier axe C1 par rapport audit bras supérieur 38.

De préférence, le premier actionneur 36 et le deuxième actionneur 40 sont des vérins.

De plus, l'axe A est situé à l'extrémité inférieure 34I du bras inférieur 34, l'axe B est situé à l'extrémité supérieure 345 du bras inférieur 34 et à l'extrémité inférieure 38I du bras supérieur 38, et le premier axe *C*1 est situé à l'extrémité supérieure 385 du bras supérieur 38.

L'extrémité basse 36B du premier actionneur 36 est montée mobile en rotation par rapport au châssis 32 et selon au moins un axe déporté et sensiblement parallèle par rapport à l'axe A.

L'extrémité haute 36H du premier actionneur 36 est montée mobile en rotation par rapport à une partie du bras inférieur 34 et selon au moins un axe déporté et sensiblement parallèle par rapport à l'axe A.

L'extrémité basse 40B du deuxième actionneur 40 est montée mobile en rotation par rapport à une partie du bras inférieur 34 et selon au moins un axe déporté et sensiblement parallèle par rapport à l'axe B.

L'extrémité haute 40H du deuxième actionneur 40 est montée mobile en rotation par rapport à une partie du bras supérieur 38 et selon au moins un axe déporté et sensiblement parallèle par rapport à l'axe B.

Bien entendu, ledit lamier 42 est équipé de moyens de coupe 46 comprenant au moins un disque 48, ou une lame, de coupe entraîné en rotation par un moteur 50, de préférence embarqué par ledit lamier 42, par l'intermédiaire de moyens de transmission appropriés et protégés par un carter par exemple.

Afin de pouvoir embarquer le dispositif 30 de taille avec un engin, tel un tracteur ou tout autre porteur, le châssis 32 dispose de moyens d'attelage 52 à trois points (52-1,52-2.52-3), et afin de pouvoir reposer le dispositif 30 sur le sol, ledit châssis 32 est équipé de pieds supports 54, de préférence rétractables ou amovibles afin de ne pas gêner lors de l'utilisation du dispositif 30, notamment en venant buter ou s'accrocher sur un quelconque obstacle ou sur le sol en raison du relief.

En raison des possibilités de mouvement du bras inférieur 34, du bras supérieur 38, et du lamier 42, il est prévu des moyens mécaniques d'asservissement 56 des mouvements du lamier 42 aux mouvements desdits bras inférieur 34 et supérieur 38.

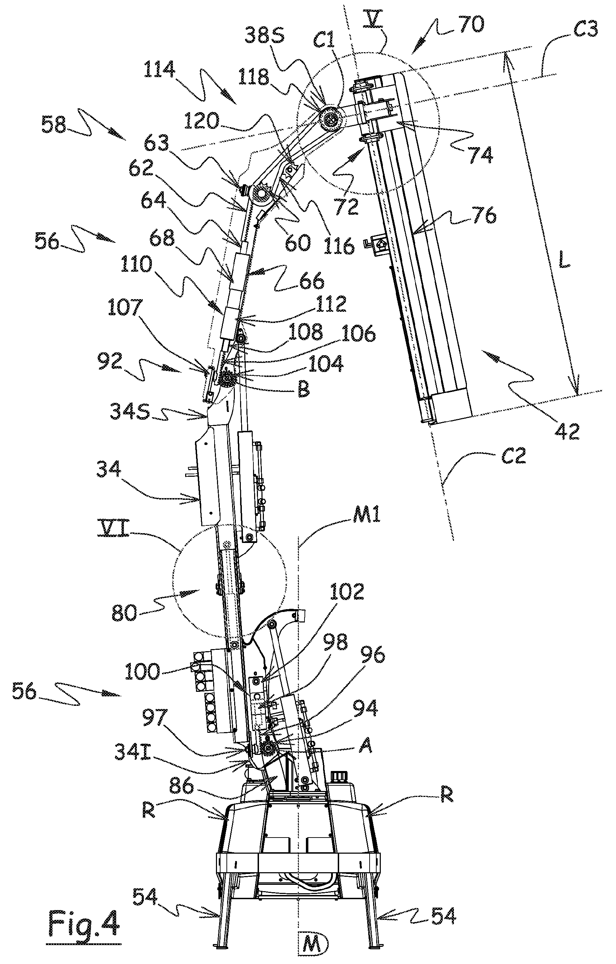

Visibles en figure 4, ces moyens mécaniques d'asservissement 56 comprennent au moins un dispositif principal 58 d'entraînement en rotation du lamier 42 selon ledit premier axe *C*1.

De manière avantageuse concernant l'encombrement du dispositif 30 de taille, ledit dispositif principal 58 d'entraînement comprend au moins un pignon d'entraînement 60 mobile par rapport au bras supérieur 38, c'est-à-dire par rapport à sa structure, et relié audit lamier 42 de manière à l'entraîner en rotation autour dudit premier axe *C*1.

Ledit dispositif principal 58 d'entraînement comprend aussi une crémaillère 62 engrenant sur ledit pignon d'entraînement 60 et fixée à la tige 64 d'un vérin 66 comprenant un corps 68, la crémaillère 62 se translatant et étant maintenue sur ledit pignon d'entraînement 60 par une liaison glissière 63, notamment un patin en forme de U enserrant ladite crémaillère, avec le bras supérieur 38, ou sa structure.

Par structure du bras supérieur 38, ou du bras inférieur 34, l'invention entend le bâti ou l'ensemble des éléments porteurs desdits bras, par opposition aux équipements, carters de protection, ...

En commandant la rentrée/sortie de la tige 64 du vérin 66, on commande ainsi la rotation du pignon d'entraînement 60 et donc la rotation du lamier 42 autour du premier axe *C*1.

Avantageusement, afin d'augmenter ou de diminuer de manière maximale le déport du lamier 42 par rapport au châssis 32 du dispositif 30, et donc de l'engin, le lamier 42 est mobile en translation par rapport audit bras supérieur 38 selon au moins un deuxième axe *C*2 sensiblement perpendiculaire au premier axe *C*1.

A cet effet, ledit lamier 42 est mu en translation sur toute sa longueur L par un dispositif à coulisse 70.

Plus précisément, ce dispositif à coulisse 70 est situé entre le dispositif principal 58 d'entraînement en rotation et le lamier 42.

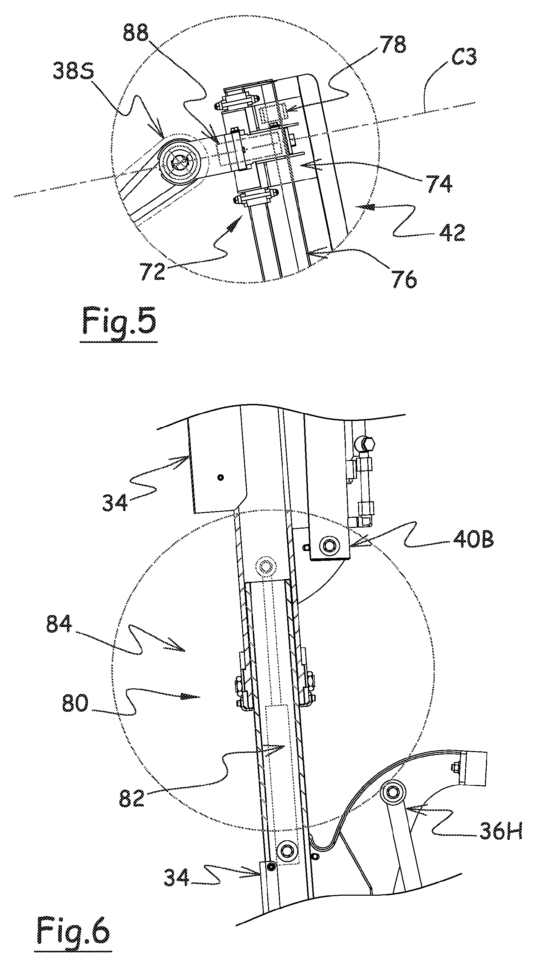

Comme représenté en détails sur la figure 5, ledit dispositif à coulisse 70 prend la forme d'au moins une liaison glissière 72 entre le lamier 42 et un support 74 entraîné en rotation par ledit dispositif principal 58, d'une barre filetée 76 fixée au bâti du lamier 42, et d'un écrou 78 entraîné en rotation sur ladite barre filetée 76 depuis ledit support 74.

Selon une première caractéristique possible de l'invention, illustrée en détails sur la figure 6, afin de pouvoir facilement augmenter la portée de travail en hauteur et/ou en longueur de déport du dispositif 30 de taille, le bras inférieur 34 peut comprendre une rallonge 80, fixe ou télescopique par l'intermédiaire d'un vérin 82 par exemple, et intégrée dans sa/ partie intermédiaire 84, ladite partie intermédiaire 84 étant prise de préférence sensiblement au-dessus du point de montage sur une partie du bras inférieur 34 de l'extrémité haute 36H du premier actionneur 36, et sensiblement au-dessous du point de montage sur une partie du bras inférieur 34 de l'extrémité basse 40B du deuxième actionneur 40.

Selon une deuxième caractéristique possible de l'invention, afin de pouvoir travailler en aller-retour avec l'engin sur la végétation d'un même pan d'une haie ou d'une rangée d'arbres, il est nécessaire de pouvoir retourner les bras supérieur 38 et inférieur 34 sensiblement symétriquement par rapport à un plan médian vertical M dudit dispositif 30 et sensiblement parallèle audit pan de haie ou d'arbres.

A cet effet, le châssis 32 comprend un socle 86 motorisé en rotation selon un axe M1 sensiblement vertical et situé dans ledit plan médian vertical M, l'extrémité inférieure 34I du bras inférieur 34 ainsi que l'extrémité basse 36B du premier actionneur 36 étant évidemment dans ce cas chacune montées libres en rotation selon au moins un axe respectif sur ledit socle 86.

Bien entendu, toujours pour pouvoir travailler en aller-retour, et en raison de la possibilité de retourner les bras supérieur 38 et inférieur 34 sensiblement symétriquement par rapport à un plan médian vertical M, le lamier 42 est monté mobile en rotation par rapport audit bras supérieur 38 selon un troisième axe *C*3 perpendiculaire au premier axe *C*1 et entraîné en rotation par un dispositif auxiliaire 88 situé entre le dispositif principal 58 et le lamier 42 ou, de préférence, le dispositif à coulisse 70.

Cette mobilité en rotation du lamier par rapport au troisième axe *C*3 perpendiculaire au premier axe *C*1 est nécessaire afin de basculer le profil d'attaque P du lamier 42 dans la direction d'avance de l'engin lors du trajet retour et après un retournement des bras supérieur 38 et inférieur 34 par rapport au plan médian vertical M.

De préférence, ce dispositif auxiliaire 88 est prévu au niveau du support 74 du dispositif à coulisse 70.

Selon une caractéristique importante de l'invention, afin de maintenir le lamier 42 dans une position donnée de travail par rapport à la végétation, généralement sensiblement verticale ou horizontale, lors des mouvements des bras supérieur 38 et inférieur 34 sous l'effet des actionneurs (36,40), les moyens mécaniques d'asservissement 56 comprennent un premier dispositif 90 de suivi de la rotation du bras inférieur 34 par rapport au châssis 32 et un deuxième dispositif 92 de suivi de la rotation du bras supérieur 38 par rapport au bras inférieur 34.

Plus précisément, le premier dispositif 90 de suivi comprend un pignon fixe 94 par rapport au châssis 32, une crémaillère 96 engrenant sur ledit pignon fixe 94 et fixée à la tige 98 d'un vérin 100, le corps 102 dudit vérin 100 étant fixé au bras inférieur 34, notamment à sa structure, et la crémaillère 96 étant entraînée en translation par rapport au corps 102 du vérin 100 lors d'une rotation du bras inférieur 34 par rapport au châssis 32 selon l'axe A. Avantageusement, ladite crémaillère 96 est maintenue sur ledit pignon fixe 94 par une liaison glissière 97, notamment un patin en forme de U enserrant ladite crémaillère 96, avec le bras inférieur 34, ou sa structure.

Ensuite, le deuxième dispositif 92 de suivi comprend un pignon fixe 104 par rapport au bras inférieur 34, une crémaillère 106 engrenant sur ledit pignon fixe 104 et fixée à la tige 108 d'un vérin 110, la crémaillère 106 étant entraînée en translation par rapport au bras 38 lors d'une rotation du bras supérieur 38 par rapport au bras inférieur 34 selon l'axe B.

A cet effet, ladite crémaillère 106 est maintenue sur ledit pignon d'entraînement fixe 104 par une liaison glissière 107, notamment un patin en forme de U enserrant ladite crémaillère 106, avec le bras supérieur 38, ou sa structure.

Afin de réaliser ledit asservissement mécanique de la position du lamier 42 aux mouvements des bras supérieur 38 et inférieur 34, au moins une chambre du vérin 100 du premier dispositif 90 de suivi est reliée à au moins une chambre du vérin 110 du deuxième dispositif 92 de suivi, et le corps 112 du vérin 110 du deuxième dispositif 92 de suivi est solidaire du corps 68 du vérin 66 du dispositif principal 58 d'entraînement, ledit vérin 110 du deuxième dispositif 92 et ledit vérin 66 du dispositif principal 58 étant monté dos à dos.

Grâce à cette conception, toute rotation du bras supérieur 38, respectivement du bras inférieur 34, est reproduite en direct au niveau du pignon 60 dans la même amplitude mais dans le sens opposé, cette reproduction inversée compense les rotations des bras (34,38) et permet ainsi de maintenir le lamier 42 dans sa position.

Etant donné les mouvements possibles du lamier 42 au niveau de l'extrémité supérieure 385 du bras supérieur 38 et la course de la crémaillère 62 au-delà du pignon d'entraînement 60 du dispositif principal 58 d'entraînement en rotation, ledit bras supérieur 38 intègre une rallonge 114 d'entraînement permettant de déporter le premier axe *C*1 d'entraînement dudit pignon d'entraînement 60. Cette rallonge 114 d'entraînement prend la forme d'une transmission par chaîne 116 entre ledit pignon d'entraînement 60 du dispositif principal 58 et un pignon de sortie 118 situé à l'extrémité supérieure 385 du bras supérieur 38 et solidaire du lamier 42 en rotation selon le premier axe *C*1.

De préférence, ladite transmission par chaîne 116 prévoit un élément tendeur 120 maintenant ladite chaîne en tension.

Avantageusement, un logement 117 de protection, par exemple sous forme d'un bossage dans des carters de protection enveloppant le bras supérieur 38, est prévu au dessus du pignon d'entraînement 60 et de ladite transmission par chaîne pour réserver un espace correspondant à la course maximale de la crémaillère 62 au-delà du pignon d'entraînement 60.

Enfin, selon un mode de réalisation du dispositif 30 de taille selon l'invention, les différents actionneurs (36,40), les moyens mécaniques d'asservissement 56, le dispositif principal 58 d'entraînement en rotation, le moteur 50 du lamier 42, et la motorisation du socle 86 sont à énergie hydraulique et reliés à un groupe hydraulique porté par le châssis 32 et comprenant une centrale hydraulique et un système de distribution commandé, automatiquement ou manuellement, avec deux réservoirs R de fluide hydraulique de part et d'autre du dispositif 30, ladite centrale hydraulique prenant par exemple la forme d'une motopompe et étant entraînée par prise de force du tracteur.

De préférence, et même s'ils peuvent aussi être à énergie hydraulique, le dispositif à coulisse 70 et le dispositif auxiliaire 88 d'entraînement en rotation sont à énergie électrique.

Bien entendu, l'invention couvre aussi toutes les variantes pouvant être imaginées à partir du mode de réalisation du dispositif de taille 30 qui vient d'être décrit, notamment en ce qui concerne le nombre de bras dudit dispositif.

## Revendications

1. Dispositif (30) de taille pour la végétation comprenant au moins un châssis (32), au moins un bras inférieur (34) mobile en rotation selon au moins un axe A par rapport au châssis (32) et animé par au moins un premier actionneur (36), au moins un bras supérieur (38) mobile en rotation selon au moins un axe B par rapport au bras inférieur (34) et animé par au moins un deuxième actionneur (40), au moins un lamier (42) relié à l'extrémité supérieure (385) du bras supérieur (38) et monté mobile en rotation selon au moins un premier axe *C*1 par rapport audit bras supérieur (38), et des moyens mécaniques d'asservissement (56) des mouvements du lamier (42) aux mouvements desdits bras inférieur (34) et supérieur (38), lesdits moyens mécaniques d'asservissement (56) comprenant au moins un dispositif principal (58) d'entraînement en rotation du lamier (42) selon ledit premier axe *C*1, **caractérisé en ce que** les moyens mécaniques d'asservissement (56) comprennent un premier dispositif de suivi (90) de la rotation du bras inférieur (34) par rapport au châssis (32) avec un vérin (100) dont la tige (98) est entraînée en translation par rapport au corps (102) du vérin (100) lors d'une rotation du bras inférieur (34) par rapport au châssis (32) selon l'axe A, et un deuxième dispositif de suivi (92) de la rotation du bras supérieur (38) par rapport au bras inférieur (34) avec un vérin (110) dont la tige (108) est entraînée en translation par rapport au bras (38) lors d'une rotation du bras supérieur (38) par rapport au bras inférieur (34) selon l'axe B, et **en ce qu'**au moins une chambre du vérin (100) du premier dispositif (90) de suivi est reliée à au moins une chambre du vérin (110) du deuxième dispositif (92) de suivi.

2. Dispositif (30) de taille pour la végétation selon la revendication 1, **caractérisé en ce que** le premier dispositif de suivi (90) comprend un pignon fixe (94) par rapport au châssis (32), une crémaillère (96) engrenant sur ledit pignon fixe (94) et fixée à la tige (98) du vérin (100), le corps (102) dudit vérin étant fixé au bras inférieur (34), et la crémaillère (96) étant entraînée en translation par rapport au corps (102) du vérin (100) lors d'une rotation du bras inférieur (34) par rapport au châssis (32) selon l'axe A, et **en ce que** le deuxième dispositif de suivi (92) comprend un pignon fixe (104) par rapport au bras inférieur (34), une crémaillère (106) engrenant sur ledit pignon fixe (104) et fixée à la tige (108) du vérin (110) comprenant un corps (112), la crémaillère (106) étant entraînée en translation par rapport au bras (38) lors d'une rotation du bras supérieur par rapport au bras inférieur selon l'axe B.

3. Dispositif (30) de taille pour la végétation selon la revendication 1 ou 2, **caractérisé en ce que** ledit dispositif principal (58) d'entraînement comprend au moins un pignon d'entraînement (60) mobile par rapport au bras supérieur (38) et relié audit lamier (42), une crémaillère (62) engrenant sur ledit pignon d'entraînement (60) et fixée à la tige (64) d'un vérin (66) comprenant un corps (68), la crémaillère (62) se translatant et étant maintenue sur ledit pignon d'entraînement (60) par une liaison glissière (63) avec le bras supérieur (38).

4. Dispositif (30) de taille pour la végétation selon la revendication 3, **caractérisé en ce que** le corps (112) du vérin (110) du deuxième dispositif (92) de suivi est solidaire du corps (68) du vérin (66) du dispositif principal (58) d'entraînement, ledit vérin (110) du deuxième dispositif (92) et ledit vérin (66) du dispositif principal (58) étant montés dos à dos.

5. Dispositif (30) de taille pour la végétation selon l'une des revendications 1 à 4, **caractérisé en ce que** le lamier (42) est mobile en translation par rapport audit bras supérieur (38) selon au moins un deuxième axe *C*2 perpendiculaire au premier axe *C*1 et **en ce qu'**il est mu en translation sur toute sa longueur L par un dispositif à coulisse (70).

6. Dispositif (30) de taille pour la végétation selon la revendication 5, **caractérisé en ce que** le dispositif à coulisse (70) est situé entre le dispositif principal (58) d'entraînement en rotation et le lamier (42), et **en ce que** ledit dispositif à coulisse (70) prend la forme d'au moins une liaison glissière (72) entre le lamier (42) et un support (74) entraîné en rotation par ledit dispositif principal (58), d'une barre filetée (76) fixée au bâti du lamier (42), et d'un écrou (78) entraîné en rotation sur ladite barre filetée (76) depuis ledit support (74).

7. Dispositif (30) de taille pour la végétation selon l'une des revendications 1 à 6, **caractérisé en ce que** le bras inférieur (34) comprend une rallonge (80), fixe ou télescopique par l'intermédiaire d'un vérin (82), et intégrée dans sa partie intermédiaire (84).

8. Dispositif (30) de taille pour la végétation selon l'une des revendications 1 à 7, **caractérisé en ce que** le châssis (32) comprend un socle (86) motorisé en rotation selon un axe vertical M1, et **en ce que** l'extrémité inférieure (341) du bras inférieur (34) ainsi que l'extrémité basse (36B) du premier actionneur (36) sont chacune montées libres en rotation selon au moins un axe respectif sur ledit socle (86).

9. Dispositif (30) de taille pour la végétation selon l'une des revendications 1 à 8, **caractérisé en ce que** le lamier (42) est monté mobile en rotation par rapport audit bras supérieur (38) selon un troisième axe *C*3 perpendiculaire au premier axe *C*1 et entraîné en rotation par un dispositif auxiliaire (88) situé entre le dispositif principal (58) et le lamier (42), ou le dispositif à coulisse (70).

10. Dispositif (30) de taille pour la végétation selon l'une des revendications 1 à 9, **caractérisé en ce que** le bras supérieur (38) intègre une rallonge d'entraînement (114) prenant la forme d'une transmission par chaîne (116) entre le pignon d'entraînement (60) du dispositif principal (58) et un pignon de sortie (118) situé à l'extrémité supérieure (385) du bras supérieur (38) et solidaire du lamier (42) en rotation selon le premier axe *C*1.

11. Dispositif (30) de taille pour la végétation selon l'une des revendications 1 à 10, **caractérisé en ce que** les différents actionneurs (36,40), les moyens mécaniques d'asservissement (56), le dispositif d'entraînement (58) en rotation, le moteur (50) du lamier (42), et la motorisation du socle (86) sont à énergie hydraulique et reliés à un groupe hydraulique porté par le châssis (32) et comprenant une centrale hydraulique et un système de distribution commandé avec deux réservoirs R de fluide hydraulique de part et d'autre du dispositif (30).

## Patentansprüche

1. Vorrichtung (30) zum Schneiden von Vegetation mit wenigstens einem Gestell (32), wenigstens einem unteren Arm (34), der bezüglich des Gestells (32) um wenigstens eine Achse A drehbar ist und von wenigstens einem ersten Stellantrieb (36) angetrieben ist, mit wenigstens einem oberen Arm (38), der bezüglich des unteren Arms (34) um wenigstens eine Achse B drehbar ist und durch wenigstens einen zweiten Stellantrieb (40) angetrieben ist, mit wenigstens einer Schneidevorrichtung (42), die mit dem oberen Ende (38S) des oberen Arms (38) verbunden ist und bezüglich des oberen Arms (38) um wenigstens eine erste Achse C1 drehbar montiert ist, und mit mechanischen Koppelmitteln (56) der Bewegung der Schneidevorrichtung (42) mit den Bewegungen des unteren (34) und oberen (38) Arms, wobei die mechanischen Koppelmittel (56) wenigstens eine Hauptantriebsvorrichtung (58) für die Drehung der Schneidevorrichtung (42) um die erste Achse C1 aufweisen, **dadurch gekennzeichnet, dass** die mechanischen Koppelmittel (56) eine erste Folgevorrichtung (90) für die Drehung des unteren Arms (34) bezüglich des Gestells (32) mit einem Zylinder (100) aufweisen, dessen Stange (98) bezüglich des Körpers (102) des Zylinders (100) verschoben wird, wenn der untere Arm (34) bezüglich des Gestells (32) um die Achse A gedreht wird, und eine zweite Folgevorrichtung (92) für die Drehung des oberen Arms (38) bezüglich des unteren Arms (34) mit einem Zylinder (110) aufweisen, dessen Stange (108) bezüglich des Arms (38) verschoben wird, wenn der obere Arm (38) bezüglich des unteren Arms (34) um die Achse B gedreht wird, und dass wenigstens eine Zylinderkammer (100) der ersten Folgevorrichtung (90) mit wenigstens einer Zylinderkammer (110) der zweiten Folgevorrichtung (92) verbunden ist.

2. Vorrichtung (30) zum Schneiden von Vegetation nach Anspruch 1, **dadurch gekennzeichnet, dass** die erste Folgevorrichtung (90) ein bezüglich des Gestells (32) festes Zahnrad (94) und eine Zahnstange (96) aufweist, die in das feste Zahnrad (94) eingreift und an der Stange (98) des Zylinders (100) angebracht ist, wobei der Körper (102) des Zylinders am unteren Arm (34) angebracht ist und die Zahnstange (96) bezüglich des Körpers (102) des Zylinders (100) verschoben wird, wenn der untere Arm (34) bezüglich des Gestells (32) um die Achse A gedreht wird, und dass die zweite Folgevorrichtung (92) ein bezüglich des unteren Arms (34) festes Zahnrad (104) und eine Zahnstange (106) aufweist, die in das feste Zahnrad (104) eingreift und an der Stange (108) des Zylinders (110) angebracht ist, der einen Körper (112) aufweist, wobei die Zahnstange (106) bezüglich des Arms (38) verschoben wird, wenn der obere Arm bezüglich des unteren Arms um die Achse B gedreht wird.

3. Vorrichtung (30) zum Schneiden von Vegetation nach Anspruch 1 oder 2, **dadurch gekennzeichnet, dass** die Hauptantriebsvorrichtung (58) ein bezüglich des oberen Arms (38) bewegliches und mit der Schneidevorrichtung (42) verbundenes Antriebszahnrad (60) und eine Zahnstange (62) aufweist, die in das Antriebszahnrad (60) eingreift und mit der Stange (64) eines Zylinders (66) verbunden ist, der einen Körper (68) aufweist, wobei sich die Zahnstange (62) verschiebt und auf dem Antriebszahnrad (60) durch eine Gleitverbindung (63) mit dem oberen Arm (38) gehalten ist.

4. Vorrichtung (30) zum Schneiden von Vegetation nach Anspruch 3, **dadurch gekennzeichnet, dass** der Körper (112) des Zylinders (110) der zweiten Folgevorrichtung (92) mit dem Körper (68) des Zylinders (66) der Hauptantriebsvorrichtung (58) eine Einheit bildet, wobei der Zylinder (110) der zweiten Vorrichtung (92) und der Zylinder (66) der Hauptantriebsvorrichtung (58) Rücken an Rücken angeordnet sind.

5. Vorrichtung (30) zum Schneiden von Vegetation nach einem der Ansprüche 1 bis 4, **dadurch gekennzeichnet, dass** die Schneidevorrichtung (42) bezüglich des oberen Arms (38) entlang wenigstens einer zweiten Achse C2 im rechten Winkel zur ersten Achse C1 verschiebbar ist und dass diese über die ganze Länge L durch eine Verschiebevorrichtung (70) verschoben ist.

6. Vorrichtung (30) zum Schneiden von Vegetation nach Anspruch 5, **dadurch gekennzeichnet, dass** die Verschiebevorrichtung (70) zwischen der Hauptantriebsvorrichtung (58) für die Drehung und der Schneidevorrichtung (42) angeordnet ist und dass die Verschiebevorrichtung (70) die Gestalt wenigstens einer Gleitverbindung (72) zwischen der Schneidevorrichtung (42) und einer Halterung (74) aufweist, die durch die Hauptantriebsvorrichtung (58) gedreht ist, die Gestalt einer Gewindestange (76) aufweist, die am Tragerahmen der Schneidevorrichtung (42) angebracht ist, und die Gestalt einer Schraube (78) aufweist, die auf der Gewindestange (76) im Bereich der Halterung (74) in Drehung versetzt wird.

7. Vorrichtung (30) zum Schneiden von Vegetation nach einem der Ansprüche 1 bis 6, **dadurch gekennzeichnet, dass** der untere Arm (34) eine Verlängerung (80) aufweist, die fest oder teleskopartig mittels eines Zylinders (82) ausgebildet ist und die in dessen mittleren Abschnitt (84) integriert ist.

8. Vorrichtung (30) zum Schneiden von Vegetation nach einem der Ansprüche 1 bis 7, **dadurch gekennzeichnet, dass** das Gestell (32) ein Unterteil (86) aufweist, das für eine Drehung um eine vertikale Achse M1 motorisiert ist und dass das untere Ende (34I) des unteren Arms (34) ebenso wie das untere Ende (36B) des ersten Stellantriebs (36) jeweils frei drehbar um wenigstens eine Achse auf dem Unterbau (86) angebracht sind.

9. Vorrichtung (30) zum Schneiden von Vegetation nach einem der Ansprüche 1 bis 8, **dadurch gekennzeichnet, dass** die Schneidevorrichtung bezüglich des unteren Arms (38) um eine zur ersten Achse C1 rechtwinklige dritte Achse C3 drehbar montiert ist und durch eine Hilfsvorrichtung (88) in Drehung versetzt wird, die zwischen der Hauptantriebsvorrichtung (58) und der Schneidevorrichtung (42) oder der Verschiebevorrichtung (70) angeordnet ist.

10. Vorrichtung (30) zum Schneiden von Vegetation nach einem der Ansprüche 1 bis 9, **dadurch gekennzeichnet, dass** der obere Arm (38) eine Antriebsverlängerung (114) umfasst, die als Kettenübertragung (116) zwischen dem Antriebszahnrad (60) der Hauptantriebsvorrichtung (58) und einem Ausgangszahnrad (118) ausgebildet ist, das am oberen Ende (38S) des oberen Arms (38) angeordnet ist und bei der Drehung um die erste Achse C1 eine Einheit mit der Schneidevorrichtung (42) bildet.

11. Vorrichtung (30) zum Schneiden von Vegetation nach einem der Ansprüche 1 bis 10, **dadurch gekennzeichnet, dass** die verschiedenen Stellantriebe (36, 40) die mechanischen Koppelmittel (56), die Antriebsvorrichtung (58) für die Drehung, der Motor (50) der Schneidevorrichtung (42) und die Motorisierung des Unterbaus (86) mit hydraulischer Energie arbeiten und mit einer Hydraulikgruppe verbunden sind, die von dem Gestell (32) gehalten ist und eine Hydraulikzentrale und ein eingesteuertes Verteilungssystem mit zwei Vorratsbehältern R an hydraulischer Flüssigkeit beiderseits der Vorrichtung (30) aufweist.

## Claims

1. A cutting device (30) for vegetation, comprising at least one chassis (32), at least one lower arm (34) able to rotate on at least one axis A with respect to the chassis (32) and driven by at least one first actuator (36), at least one upper arm (38) able to rotate on at least one axis B with respect to the lower arm (34) and driven by at least one second actuator (40), at least one cutting boom (42) connected to the top end (38S) of the upper arm (38) and mounted so as to be able to rotate on at least one axis C1 with respect to said upper arm (38), and mechanical means (56) for slaving the movements of the cutting boom (42) to the movements of said lower (34) and upper (38) arms, said mechanical slaving means (56) comprising at least one principal device (58) for rotating the cutting boom (42) on said first axis C1, **characterised in that** the mechanical slaving means (56) comprise a first device (90) for following the rotation of the lower arm (34) with respect to the chassis (32) with a jack (100) the stem (98) of which is driven in translation with respect to the body (102) of the jack (100) during a rotation of the lower arm (34) with respect to the chassis (32) on the axis A, and a second device (92) for following the rotation of the upper arm (38) with respect to the lower arm (34) with a jack (110) the stem (108) of which is driven in translation with respect to the arm (38) during a rotation of the upper arm (38) with respect to the lower arm (34) on the axis B, and **in that** at least one chamber of the jack (100) of the first following device (90) is connected to at least one chamber of the jack (110) of the second following device (92).

2. A cutting device (30) for vegetation according to claim 1, **characterised in that** the first following device (90) comprises a pinion (94) fixed with respect to the chassis (32), a rack (96) meshing with said fixed pinion (94) and fixed to the stem (98) of the jack (100), the body (102) of said jack being fixed to the lower arm (34), and the rack (96) being driven in translation with respect to the body (102) of the jack (100) during a rotation of the lower arm (34) with respect to the chassis (32) on the axis A, and **in that** the second following device (92) comprises a pinion (104) fixed with respect to the lower arm (34), a rack (106) meshing with said fixed pinion (104) and fixed to the stem (108) of the jack (100) comprising a body (112), the rack (106) being driven in translation with respect to the arm (38) during a rotation of the upper arm with respect to the lower arm on the axis B.

3. A cutting device (30) for vegetation according to claim 1 or 2, **characterised in that** said principal driving device (58) comprises at least one drive pinion (60) able to move with respect to the upper arm (38) and connected to said cutting boom (42), a rack (62) meshing with said drive pinion (60) and fixed to the stem (64) of a jack (66) comprising a body (68), the rack (62) translating and being held on said drive pinion (60) by a runner connection (63) with the upper arm (38).

4. A cutting device (30) for vegetation according to claim 3, **characterised in that** the body (112) of the jack (110) of the second following device (92) is secured to the body (68) of the jack (66) of the principal driving device (58), said jack (110) of the second device (92) and said jack (66) of the principal device (58) being mounted back to back.

5. A cutting device (30) for vegetation according to one of claims 1 to 4, **characterised in that** cutting boom (42) is able to move in translation with respect to said upper arm (38) on at least one second axis C2 perpendicular to the first axis C1 and **in that** it is moved in translation over its entire length L by a slide device (70).

6. A cutting device (30) for vegetation according to claim 5, **characterised in that** the slide device (70) is situated between the principal rotational driving device (58) and the cutting boom (42), and **in that** said slide device (70) takes the form of at least one runner connection (72) between the cutting boom (42) and a support (74) rotated by said principal device (58), a threaded bar (76) fixed to the frame of the cutting boom (42), and a nut (78) rotated on said threaded bar (76) from said support (74).

7. A cutting device (30) for vegetation according to one of claims 1 to 6, **characterised in that** the lower arm (34) comprises an extension (80) fixed or telescopic by means of a jack (82), and integrated in its intermediate part (84).

8. A cutting device (30) for vegetation according to one of claims 1 to 7, **characterised in that** the chassis (32) comprises a base (86) rotationally motorised on a vertical axis M1, and **in that** the bottom end (34I) of the lower arm (34) and the bottom end (36B) of the first actuator (36) are each mounted so as to be free to rotate on at least one respective axis on said base (86).

9. A cutting device (30) for vegetation according to one of claims 1 to 8, **characterised in that** the cutting boom (42) is mounted so as to be able to rotate with respect to said upper arm (38) on a third axis C3 perpendicular to the first axis C1 and rotated by an auxiliary device (88) situated between the principal device (58) and the cutting boom (42), or the slide device (70).

10. A cutting device (30) for vegetation according to one of claims 1 to 9, **characterised in that** the upper arm (38) includes a drive extension (114) taking the form of a chain transmission (116) between the drive pinion (60) of the principal device (58) and an output pinion (118) situated at the top end (38S) of the upper arm (38) and secured to the cutting boom (42) so as to rotate on the first axis C1.

11. A cutting device (30) for vegetation according to one of claims 1 to 10, **characterised in that** the various actuators (36, 40), the mechanical slaving means (56), the rotational drive device (58), the motor (50) of the cutting boom (42) and the drive of the base (86) are of the hydraulic energy type and are connected to a hydraulic set carried by the chassis (32) and comprising a hydraulic unit and a distribution system controlled with two hydraulic-fluid reservoirs R on either side of the device (30).
